# FASCICULE DE BREVET EUROPEEN

(11) **EP 0 733 973 B1**
(45) Date de publication et mention de la délivrance du brevet: **03.07.2002**
(21) Numéro de dépôt: 96400577.1
(22) Date de dépôt: 19.03.1996
(51) Int. Cl.: G06F 11/16, G06F 1/00, G11C 5/00

(54) **Détecteur de cohérence d'informations contenues dans un circuit intégré**
Nachweiseinrichtung für die Übereinstimmung von Informationen in einem integrierten Schaltkreis
Information coherency detector contained in an integrated circuit

(30) Priorité: 21.03.1995 FR 9503293
(43) Date de publication de la demande: 25.09.1996
(73) Titulaire: STMicroelectronics S.A., 92120 Montrouge (FR)
(72) Inventeur: Wuidart, Sylvie, 94230 Cachan (FR)
(74) Mandataire: Ballot, Paul

(56) Documents cités:
- EP-A- 0 318 021
- EP-A- 0 409 284
- EP-A- 0 447 043

## Description

La présente invention concerne un détecteur de cohérence d'informations contenues dans des circuits de mémorisation d'un circuit intégré semi-conducteur, tels des registres ou des mémoires. Elle s'applique tout particulièrement aux circuits sécurisés, par exemple dans les circuits utilisés pour gérer des transactions financières.

Des détecteurs sont souvent prévus dans les circuits intégrés pour mettre en évidence des conditions anormales d'utilisation du circuit, susceptibles d'en altérer le fonctionnement. On trouve ainsi des détecteurs de basse et haute tension d'alimentation du circuit ou des détecteurs de température qui servent de parade à des menaces pré-identifiées mais non exhaustives. De tels détecteurs présentent l'inconvénient de n'identifier que quelques menaces bien précises pour le fonctionnement du circuit électronique et d'ignorer les phénomènes non identifiés comme un rayonnement électromagnétique, un bombardement de rayon X, un retournement d'alimentation électrique ou autres. Or, tant que le circuit n'est pas soumis à un phénomène perturbateur pré-identifié, on ne peut que supposer qu'il fonctionne, même si les informations contenues dans le circuit intégré ont cependant été altérées, modifiées par un phénomène en dehors des menaces pré-identifiées.

Un objet de l'invention est de pallier cet inconvénient en vérifiant l'intégrité des informations contenues dans des circuits de mémorisation d'un circuit intégré susceptible d'être soumis à divers phénomènes non identifiés pouvant en menacer le bon fonctionnement.

Selon l'invention, en associant à un circuit de mémorisation un circuit témoin de même structure contenant des informations complémentaires et en vérifiant cette complémentarité, on décèle tout phénomène perturbateur entraînant une incohérence dans les informations du circuit de mémorisation.

Telle qu'elle est revendiquée dans la revendication 1, l'invention concerne un détecteur de cohérence d'informations contenues dans un circuit de mémorisation d'un circuit intégré. Selon l'invention, le détecteur comporte un circuit témoin de même structure que le circuit de mémorisation, contenant des informations complémentaires, et un circuit de contrôle de la complémentarité des informations pour déceler un phénomène perturbateur ayant entraîné une incohérence des informations du circuit de mémorisation.

Dans une application à un circuit mémoire, le circuit témoin comprend un plan mémoire d'au moins deux cellules, un circuit d'écriture des cellules pour écrire les informations complémentaires et un circuit de lecture pour délivrer les informations lues au circuit de contrôle de la complémentarité de ces informations, les différents éléments du circuit témoin étant de même type que ceux correspondants du circuit mémoire.

Dans une application à un circuit de mémorisation dont un élément comprend une capacité dont une borne est connectée à un noeud de rebouclage d'inverseurs en série, le circuit témoin comprend au moins deux éléments de ce type, la complémentarité des informations contenues dans ces éléments du circuit témoin étant obtenue en plaçant un transistor de charge en série ou bien entre une première tension logique et la borne de la capacité connectée au noeud de rebouclage, ou bien entre une deuxième tension logique et la borne de la capacité connectée au noeud de rebouclage.

L'invention concerne aussi un circuit intégré contenant des circuits de mémorisation. Selon l'invention, un détecteur de cohérence d'informations est associé à chacun de ces circuits de mémorisation.

D'autres caractéristiques et avantages de l'invention apparaîtront à la lumière de la description qui suit, faite à titre indicatif et non limitatif de l'invention, en référence aux dessins annexés dans lesquels :
- la figure 1 est une architecture générale d'un circuit intégré comprenant des détecteurs de cohérence d'informations selon l'invention,
- la figure 2 est un schéma de principe d'un détecteur de cohérence d'informations selon l'invention,
- la figure 3 est un schéma d'une application d'un détecteur de cohérence d'informations à un circuit mémoire,
- la figure 4 est un schéma d'une application d'un détecteur de cohérence d'informations à un registre de maintien capacitif à rebouclage d'inverseurs et
- la figure 5 est un diagramme des différents signaux du registre détaillé à la figure 4.

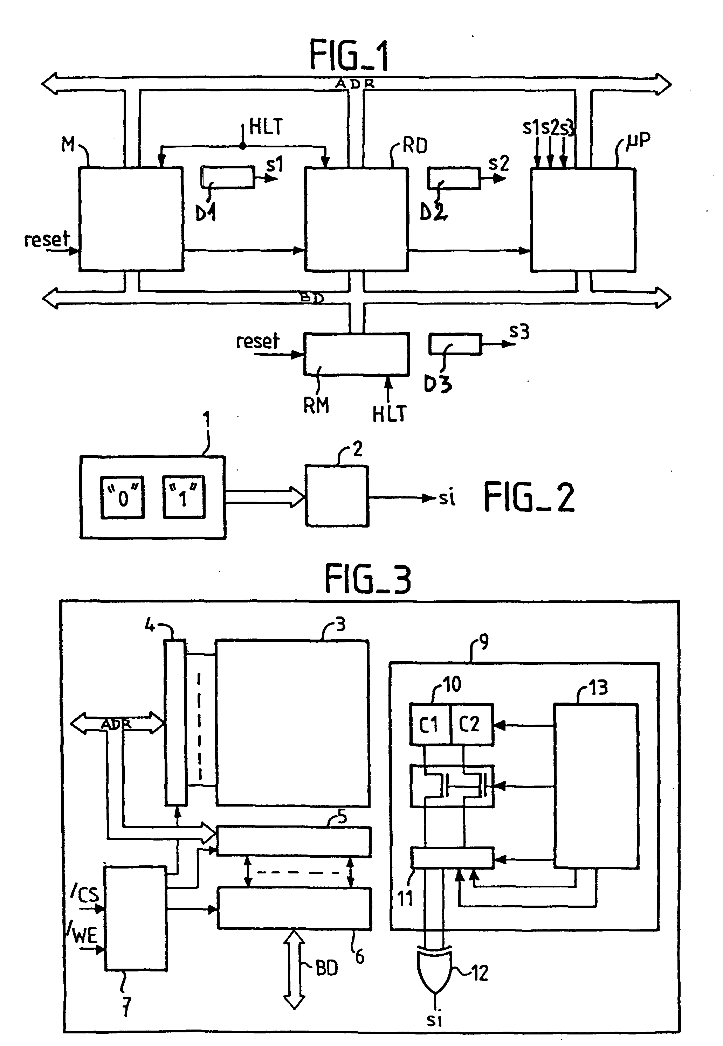

Sur la figure 1, on a représenté un exemple d'architecture d'un circuit électronique intégré qui comprend un microprocesseur µP, un registre à décalage RD, une mémoire M et un registre de maintien RM des données sur un bus de données BD, connecté aux différents éléments du circuit qui reçoivent également des données d'un bus d'adresse ADR.

Selon l'invention, le circuit électronique comprend aussi des circuits de détection de cohérence des informations contenues dans les différents circuits de mémorisation du circuit intégré.

Dans l'exemple, on a ainsi un premier détecteur D1 de cohérence des informations contenues dans la mémoire M, un deuxième détecteur D2 de cohérence des informations contenues dans le registre à décalage RD et un troisième détecteur D3 de cohérence des informations contenues dans le registre de maintien RM.

Ces détecteurs de cohérence d'informations délivrent chacun respectivement un signal de sortie s1, s2, s3 qui informe sur la cohérence des informations contenues dans le circuit de mémorisation correspondant. Ces signaux sont appliqués à un circuit de gestion des anomalies, qui peut être le microprocesseur dans l'exemple représenté et qui délivre par exemple un signal de blocage HLT vers les différents éléments du circuit électronique.

Chaque détecteur de cohérence comprend un circuit témoin et un circuit de contrôle, référencé respectivement 1 et 2 sur le schéma de principe de la figure 2.

Le circuit témoin a la même structure que le circuit de mémorisation correspondant et contient des informations complémentaires notées "0" et "1" sur la figure. Il délivre les informations au circuit de contrôle qui vérifie leur complémentarité et délivre un signal de sortie (si) dont l'état logique informe de la cohérence des informations contenues dans le circuit de mémorisation.

De préférence, le circuit témoin comprend deux éléments de mémorisation, du même type que ceux du circuit de mémorisation, l'un contenant l'information "0", l'autre contenant l'information "1" complémentaire.

Une application de l'invention à une mémoire est représentée sur la figure 3. Un circuit mémoire comprend de manière générale :
- un plan 3 de cellules mémoire qui stockent les informations, plan qui se présente sous la forme d'une matrice de n lignes et p colonnes,
- un décodeur de lignes 4, qui permet la sélection d'une ligne parmi n, commandé par le bus d'adresse ADR,
- un décodeur de colonnes 5, qui permet la sélection d'une ou plusieurs colonnes parmi p, commandé par le bus d'adresse ADR et
- des circuits d'écriture et de lecture 6 placés au bout de chaque colonne, qui ont pour fonction d'acheminer les données à écrire vers les cellules mémoires, ou inversement de transmettre les données lues vers la sortie.

Les circuits d'écriture et de lecture sont plus ou moins complexes suivant la nature de la cellule mémoire ou la vitesse du circuit mémoire.

Pour des cellules de mémoire RAM statique par exemple, à base de bistables, ils consistent simplement en des interrupteurs d'accès pour forcer un nouvel état du bistable ou pour lire l'état mémorisé.

Pour des cellules de mémoire morte programmables, ils comprennent des circuits de précharge, amplificateurs et comparateurs pour faire correspondre la quantité de charge stockée dans une cellule à une grandeur électrique (courant, tension), qui est alors comparée à un seuil pour fournir l'information logique correspondante.

On note que l'on entend par "information" une donnée binaire 0 ou 1 correspondant à un état logique haut ou bas.

Pour des cellules de mémoire dynamique, ils comprennent encore des circuits de rafraîchissement de données.

Le circuit mémoire comprend outre ces éléments de circuit internes, une logique de commande 7 qui gère les échanges de la mémoire avec l'extérieur. Dans un exemple de mémoire asynchrone, cette logique de commande reçoit des signaux de commande de sélection de circuit /CS et de commande d'écriture /WE et active en réponse, de manière appropriée, les circuits de lecture/écriture 6, ou met l'ensemble de la mémoire en position d'attente quand elle n'est pas sélectionnée, ce qui permet de minimiser la consommation.

Un circuit témoin 9 d'un détecteur de cohérence des informations contenues dans un tel circuit mémoire comprendra alors de préférence un plan mémoire 10 de cellules témoins (C1, C2) contenant des informations complémentaires, et des circuits d'écriture/lecture 11 correspondants. Les circuit d'écriture permettent d'écrire les informations complémentaires dans les cellules témoins.

Selon le type de mémoire, cette écriture peut se faire une seule fois, de préférence en usine dans le cas des mémoires non volatiles ou à chaque mise sous-tension du circuit intégré, dans une phase d'initialisation, pour les mémoires volatiles.

Les circuits de lecture permettent de fournir au circuit de contrôle 12 les informations lues dans les cellules témoins pour qu'il vérifie leur complémentarité. Ces éléments du circuit témoin sont de même type que ceux du circuit mémoire correspondant.

Le circuit témoin comprend en outre une logique de commande 13 pour sélectionner les cellules témoins en écriture ou lecture selon un séquencement identique (vitesse d'accès, chronogramme) à celui du circuit mémoire, mais permettant un accès en lecture continu ou des accès en lecture répétés, pour vérifier la complémentarité des informations pendant tout le fonctionnement du circuit. La fréquence de la répétition des accès peut être aléatoire ou fixe et dépendante du temps d'accès en lecture. Des décodeurs de lignes ou de colonnes spécifiques au circuit témoin ne sont plus nécessaires, sauf à envisager des contrôles par paires de cellules, le circuit témoin comprenant alors plusieurs paires de cellules contenant des informations complémentaires. Dans le cas simple de deux cellules témoins, placées sur une même ligne et sur deux colonnes, la logique de commande 13 gère directement la ligne de bit et on prévoit un circuit de portes commandé par la logique de commande pour connecter les colonnes au circuit de lecture/écriture 11.

Le circuit de contrôle comprend dans l'exemple préféré d'un circuit témoin à deux éléments de mémorisation C1, C2, une porte 12 non ou exclusif qui délivre un "1" en sortie, si les informations sont identiques ou un "0", si elles sont complémentaires.

Les informations complémentaires contenues dans le circuit témoin, qui comprend selon l'invention les mêmes éléments que le circuit mémoire, sont susceptibles d'être modifiées de la même manière que celles contenues dans le circuit mémoire. En effet, l'information lue est fonction de l'information effectivement écrite dans une cellule de la mémoire et le cas échéant, fonction des caractéristiques des circuits de lecture : des conditions anormales de fonctionnement peuvent en effet affecter le résultat de la lecture, par exemple en modifiant les seuils de basculement des inverseurs. En utilisant un circuit témoin dans lequel on a dupliqué toute la chaîne d'accès à l'information (écriture, stockage, lecture), on est en mesure de détecter toute perturbation qui pourrait affecter d'une manière ou d'une autre le circuit mémoire.

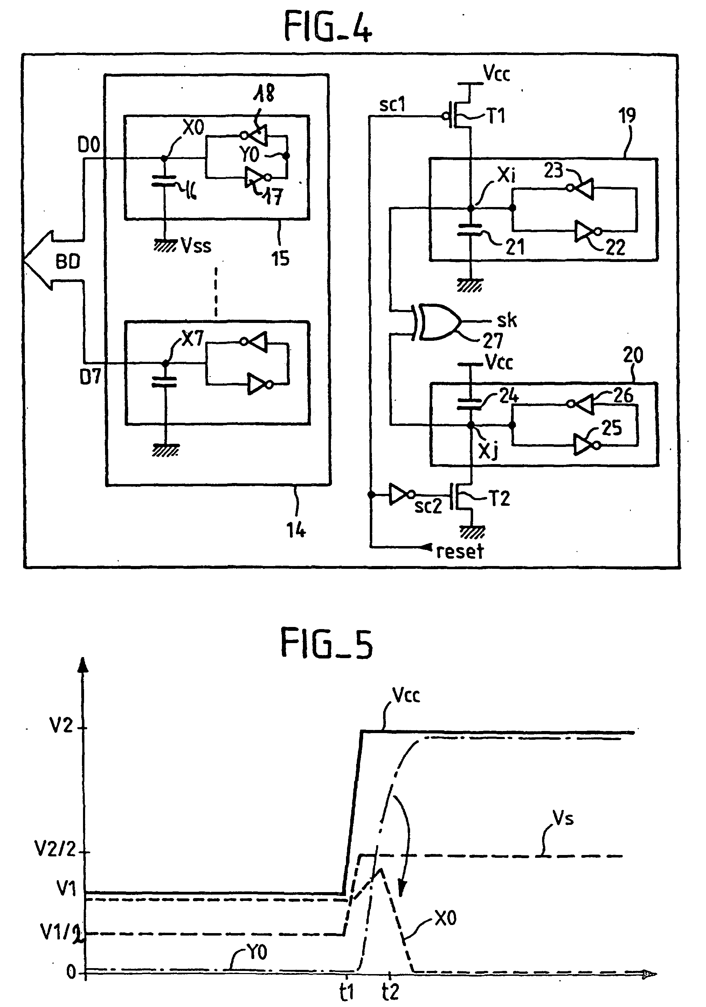

Dans une application à un registre 14 de maintien capacitif représenté sur la figure 4, un élément 15 du registre comprend une capacité 16 dont une borne est connectée au noeud X0 d'un étage d'inverseurs en série, rebouclés. La capacité est par ailleurs connectée à une tension logique (Vss). Dans l'exemple, l'étage de rebouclage comprend deux inverseurs 17 et 18, l'un (17) très peu résistif pour suivre les variations du noeud de rebouclage X0, l'autre (18) très résistif pour maintenir en sortie l'information sur le noeud X0. Un tel registre est classiquement utilisé pour maintenir des données sur les bus du circuit intégré. Dans l'exemple, le bus de données comprenant 8 bits D0-D7, le registre 14 comprend 8 éléments de mémorisation tels que l'élément 15 déjà décrit, le noeud de l'étage de rebouclage connecté à la capacité étant relié à un bit respectif du bus de données (X0 relié à D0, ... , X7 relié à D7).

Selon l'invention, un détecteur de cohérence d'information lui est associé qui comprend un circuit témoin comportant dans l'exemple représenté deux éléments de mémorisation 19 et 20 de même type que ceux (15) du registre de maintien 14.

L'élément de mémorisation 19 comprend ainsi une capacité 21 dont une borne est connectée au noeud Xi d'un étage de rebouclage d'inverseurs 22, 23 en série. L'élément de mémorisation 20 comprend une capacité 24 dont une borne est connectée au noeud Xj d'un étage de rebouclage d'inverseurs 25, 26 en série.

Selon l'invention, les éléments de mémorisation du circuit témoin contiennent des informations complémentaires. Le circuit témoin comprend avantageusement un dispositif pour forcer l'un des éléments de mémorisation à un et l'autre à zéro.

Ainsi, pour le premier élément de mémorisation 19, un transistor de charge T1 est prévu entre une première tension logique (Vcc) et la borne de la capacité 21 connectée au noeud Xi de rebouclage, l'autre borne de la capacité 21 étant connectée à une deuxième tension logique. Pour le deuxième élément de mémorisation 20, un transistor de charge T2 est prévu entre la deuxième tension logique (Vss) et la borne de la capacité 24 connectée au noeud Xj de rebouclage.

Un signal de commande respectivement sc1 et sc2 rend conducteur les transistors T1 et T2, pour obtenir respectivement, après la mise sous tension du circuit, une tension de l'ordre de la première tension logique sur le noeud Xi et de la deuxième tension logique sur le noeud Xj.

Dans le cas simple d'une première tension logique égale à la tension d'alimentation logique positive du circuit (Vcc) et d'une deuxième tension logique égale à la tension d'alimentation logique nulle (Vss), on obtient ainsi un état logique "1" au noeud Xi et "0" au noeud Xj, maintenus par leur étage respectif d'inverseurs rebouclés en série : les éléments de mémorisation fournissent ici une lecture directe de l'information mémorisée. Les entrées du circuit de contrôle sont donc reliées aux noeuds de rebouclage Xi, Xj des éléments de mémorisation. Le circuit de contrôle comprend dans l'exemple une porte 27 non ou exclusif qui délivre en sortie le signal de détection.

Dans la suite, on considère que la première tension logique est Vcc et la deuxième tension logique est Vss.

De préférence, le transistor T1 sera alors de type P (MOS canal P ou bipolaire PNP par exemple) et commandé par le signal d'initialisation reset des éléments du circuit intégré et le transistor T2 sera de type N (MOS canal N ou bipolaire NPN par exemple), et commandé par l'inverse du signal d'initialisation du circuit intégré. Ainsi, durant la phase d'initialisation, pendant laquelle le signal d'initialisation du circuit intégré est à l'état bas, les transistors T1 et T2 sont rendus conducteurs.

Le détecteur selon l'invention permet de déceler tout phénomène perturbateur, qui dans le cas particulier de la mémorisation par maintien capacitif et rebouclage d'inverseurs peut affecter notamment la charge de la capacité et les seuils de basculement des inverseurs.

La figure 5 représente ainsi un diagramme des temps des signaux de l'élément de mémorisation 15 du registre de maintien 14 de la figure 4.

Le noeud X0 est à "1" dans l'exemple, c'est à dire à un niveau proche de la tension logique Vcc, qui a une valeur nominale V1. Le seuil Vs des inverseurs est fonction de la tension aux bornes (ici Vcc-Vss=Vcc) et calibré de manière classique pour être égal à la moitié de cette tension, soit ici Vcc/2=V1/2.

Le noeud Y0, entre le premier et le deuxième inverseur, est à l'état logique "0", soit à 0 volt.

Si une perturbation provoque une augmentation brutale de Vcc, qui prend une valeur V2, le seuil des inverseurs va suivre et devenir supérieur, égal à V2/2.

Le noeud X0, maintenu dans un premier temps au même niveau par le deuxième inverseur très résistif, a alors une tension inférieure au seuil du premier inverseur peu résistif, qui va alors basculer très vite et imposer un état "1" sur le noeud Y0 : le noeud Y0 passe de 0 à V2. Le deuxième inverseur très résistif va prendre en compte cette variation au bout d'un certain temps, et lui-même basculer en t2 pour imposer un état logique "0" sur X0. On est alors dans un nouvel état d'équilibre.

Si une variation brutale fait diminuer la tension Vcc, le niveau "1" du noeud X0 est au contraire conforté. Par contre, un niveau "0" serait modifié pour devenir un niveau "1".

Le détecteur selon l'invention, en vérifiant la complémentarité des informations en Xi et Xj, va permettre de déceler la présence d'un phénomène perturbateur.

Plus généralement, selon l'invention, on détecte tout phénomène susceptible de perturber un circuit de mémorisation en vérifiant la complémentarité des informations du circuit témoin : une perturbation n'agit en effet vraisemblablement que dans un sens, en déplaçant un point d'équilibre (bistables, inverseurs) ou en modifiant une quantité de charge (capacité, cellule mémoire morte). Il ne peut donc provoquer qu'un seul type de transition binaire, soit 0 vers 1, soit 1 vers 0, l'autre état binaire étant au contraire conforté dans son état.

Ainsi, en associant dans un circuit intégré, un détecteur à chaque circuit de mémorisation, avec un circuit témoin de même structure, on peut assurer un fonctionnement intègre du circuit.

De préférence, le circuit témoin est réalisé topologiquement à côté du circuit de mémorisation correspondant, avec les mêmes masques en sorte que le phénomène perturbateur éventuel l'atteigne de la même manière ou avec la même intensité.

De manière simple et avantageuse, il comprend deux éléments de mémorisation, comme représenté aux figures 3 et 4. Il pourrait en contenir plusieurs, par exemple deux éléments contenant un "1", deux éléments contenant un "0".

Le circuit de contrôle pourrait alors d'abord vérifier que l'on a bien les deux "1" et les deux "0" au moyen de portes "non et" et "non ou exclusif".

## Revendications

1. Détecteur de cohérence d'informations, pour un circuit de mémorisation (14) dont un élément (15) comprend une capacité (16) dont une première borne est connectée à une tension logique (Vss) et dont une deuxième borne est connectée à un noeud (X0) de rebouclage d'inverseurs (17, 18) en série, **caractérisé en ce que** ledit détecteur comprend un circuit témoin (9, 19, 20) contenant des informations complémentaires et un circuit de contrôle (12, 27) de la complémentarité des informations pour déceler un phénomène perturbateur ayant entraîné une incohérence des informations dudit circuit de mémorisation, le circuit témoin comprenant au moins deux éléments (19, 20) de même type que le circuit de mémorisation, la complémentarité des informations contenues dans ces éléments du circuit témoin étant obtenue en plaçant un transistor de charge en série ou bien entre une première tension logique et la deuxième borne de la capacité connectée au noeud de rebouclage (T1), ou bien entre une deuxième tension logique et la deuxième borne de la capacité connectée au noeud de rebouclage (T2).

2. Détecteur de cohérence d'informations selon la revendication 1, **caractérisé en ce que** la conduction du transistor de charge des éléments du circuit témoin est commandée par le signal d'initialisation du circuit.

3. Détecteur de cohérence d'informations selon l'une quelconque des revendications précédentes, **caractérisé en ce que** le circuit témoin comprend deux éléments de mémorisation (C1, C2), le circuit de contrôle comportant une porte logique non ou exclusif (12) recevant en entrées la sortie de lecture des deux éléments de mémorisation et délivrant un signal binaire de détection (si) dont l'état logique informe de la cohérence des informations du circuit de mémorisation correspondant.

4. Détecteur selon la revendication 3, **caractérisé en ce que** le signal binaire de détection est appliqué à un circuit de gestion des anomalies pour, le cas échéant, bloquer le fonctionnement du circuit intégré.

5. Détecteur selon l'une quelconque des revendications précédentes, **caractérisé en ce que** le circuit de mémorisation et le circuit témoin correspondants sont topologiquement situés à coté l'un de l'autre et fabriqués selon les mêmes masques.

6. Circuit intégré **caractérisé en ce qu'**un détecteur de cohérence d'informations selon l'une quelconque des revendications précédentes est associé à chacun des circuits de mémorisation dudit circuit intégré.

## Patentansprüche

1. Informationskohärenz-Detektor für eine Speicherschaltung (14), von der ein Element (15) eine Kapazität (16) aufweist, deren erster Anschluss an eine logische Spannung (Vss) und deren zweiter Anschluss an einen Knoten (X0) zum seriellen Rückschleifen von Invertern (17, 18) angeschlossen ist, **dadurch gekennzeichnet, dass** der Detektor eine Monitorschaltung (9, 19, 20), die komplementäre Informationen enthält, und eine Schaltung (12, 27) zur Kontrolle der Komplementarität der Informationen umfasst, um eine Störung aufzudecken, durch die eine Inkohärenz der Informationen der Speicherschaltung bewirkt wurde, wobei die Monitorschaltung mindestens zwei Elemente (19, 20) der gleichen Art wie die Speicherschaltung aufweist und die Komplementarität der in diesen Elementen der Monitorschaltung enthaltenen Informationen erhalten wird, indem ein Aufladungstransistor in Serie oder zwischen eine erste logische Spannung und den zweiten Anschluss der an den Rückschleifungs-Knoten (T1) angeschlossenen Kapazität oder aber zwischen eine zweite logische Spannung und den zweiten Anschluss der an den Rückschleifungs-Knoten (T2) angeschlossenen Kapazität platziert wird.

2. Informationskohärenz-Detektor nach Anspruch 1, **dadurch gekennzeichnet, dass** die Leitfähigkeit des Aufladungstransistors für die Elemente der Monitorschaltung vom Initialisierungssignal der Schaltung gesteuert wird.

3. Informationskohärenz-Detektor nach einem der vorhergehenden Ansprüche, **dadurch gekennzeichnet, dass** die Monitorschaltung zwei Speicherelemente (C1, C2) umfasst, wobei die Kontrollschaltung ein logisches Exklusiv-Nicht-DDER-Gatter (12) umfasst, an dessen Eingängen das Leseausgangssignal von zwei Speicherelementen anliegt und das ein binäres Detektionssignal (ja) liefert, dessen logischer Zustand über die Kohärenz der Informationen der ent-sprechenden Speicherschaltung informiert.

4. Detektor nach Anspruch 3, **dadurch gekennzeichnet, dass** das binäre Detektionssignal an eine Schaltung zur Verwaltung der Fehler angelegt wird, um gegebenenfalls den Betrieb der integrierten Schaltung zu unterbrechen.

5. Detektor nach einem der vorhergehenden Ansprüche, **dadurch gekennzeichnet, dass** die entsprechende Speicher- und Monitorschaltung topologisch nebeneinander liegen und mit den gleichen Masken hergestellt sind.

6. Integrierte Schaltung, **dadurch gekennzeichnet, dass** jeder der Speicherschaltungen der integrierten Schaltung ein Informationskohärenz-Detektor nach einem der vorhergehenden Ansprüche zugeordnet ist.

## Claims

1. A data coherence detector for a memory circuit (14) of which one element (15) comprises a capacitor (16), a first terminal of which is connected to a logic voltage (Vss) and a second terminal of which is connected to a feedback node (X0) of inverters (17,18) connected in series, **characterised in that** the said detector comprises an indicating circuit (9, 19, 20) containing complementary data and a control circuit (12, 27) for controlling the complementariness of the data, whereby to reveal a perturbational effect which has given rise to incoherence in the data of the said memory circuit, the indicating circuit comprising at least two elements (19, 20) of the same type as the memory circuit, the complementariness of the data contained in the said elements of the indicating circuit being obtained by putting a load transistor either in series or between a first logic voltage and the second terminal of the capacitor connected to the feedback node (T1), or again between a second logic voltage and the second terminal of the capacitor connected to the feedback node (T2).

2. A data coherence detector according to Claim 1, **characterised in that** the conduction of the load transistor of the elements of the indicating circuit is controlled by the signal for starting the circuit.

3. A data coherence detector according to either one of the preceding Claims, **characterised in that** the indicating circuit comprises two memory elements (C1, C2), the control circuit comprising an exclusive NOT OR gate (12) receiving as input the reading output from the two memory elements and delivering a binary detection signal (si), the logic state of which gives information as to the coherence of the data in the corresponding memory circuit.

4. A detector according to Claim 3, **characterised in that** the binary detection signal is applied to a circuit for generating anomalies, whereby to inhibit the operation of the integrated circuit as necessary.

5. A detector according to any one of the preceding Claims, **characterised in that** the corresponding memory circuit and indicating circuit are situated topologically side by side, and are made using the same masks.

6. An integrated circuit, **characterised in that** a data coherence detector according to any one of the preceding Claims is associated with each of the memory circuits of the said integrated circuit.
